# EUROPEAN PATENT APPLICATION

(11) **EP 0 979 835 A1**
(43) Date of publication of application: **16.02.2000**
(21) Application number: 99306301.5
(22) Date of filing: 10.08.1999
(51) Int. Cl.: C08G 18/10, C08G 18/71, C08G 18/69, C09J 175/14

(54) **Moisture curable pressure sensitive adhesives**

(30) Priority: 10.08.1998 US 131499
(71) Applicant: ELF ATOCHEM NORTH AMERICA, INC., Philadelphia, Pennsylvania 19103-3222 (US)
(72) Inventor: Questel, John M., Stow, Ohio 44224 (US); Pogany, Daniel T., Cuyahogal Falls, Ohio 44221 (US); Braksmayer, Diza P., Langhorne, Pennsylvania 19047 (US)
(74) Representative: Stoner, Gerard Patrick

(57) **Abstract**

A solvent-free, reactive, moisture curable, hot melt applied polyurethane pressure sensitive adhesive (PSA) composition is provided, as are methods for making the same and for using this composition to bond substrates, as well as a stable urethane prepolymer and methods for making the same.

## Description

### BACKGROUND

This invention relates to reactive, moisture curable, hot melt applied (poly)urethane pressure sensitive adhesive compositions ("PSAs") containing a urethane prepolymer, a tackifying resin and a plasticizing oil which have long term visco elasticity and which, when cured, maintain their high tack, peel adhesion and shear resistance; methods of using such PSAs to bond substrates; methods of preparing such PSAs; stable urethane prepolymers; and methods of preparing stable urethane prepolymers. The solvent-free PSA compositions of this invention are solids or extremely viscous liquids prior to reaction with atmospheric moisture. Subsequent to application as a thin film, the compositions react with atmospheric moisture resulting in both chain extension and crosslinking.

PSA products typically encompass webs of paper, plastic film or sheets, or metal foils carrying on one surface a coating or layer of a solventless solid (or highly viscous) adhesive composition that possesses sufficient tackiness (or "tack") to permit such substrates to be adhered to the surface of another object by merely contacting and momentarily pressing the adhesive layer-carrying substrate against the object surface.

In formulating PSA compositions, those skilled in the art are concerned with producing a formulation that will have a certain minimum balance of physical and chemical properties so as to be able to withstand the stresses and environment that the product will encounter and be expected to survive in use. Generally, in the technology of PSAs, the physical properties known in the art as tack, peel adhesion (the adhesion of a PSA product after the adhesive layer has been in contact with an adherent surface for a sufficient time to reach a steady state or equilibrium with the surface) and shear resistance (the durability and permanence of the adhesive bond of the adhered product when subjected to a constant delamination force) are among those paramount in determining the suitability of any given PSA composition to provide the necessary application properties and in-service durability required on the PSA product. This objective is generally not met by the existing reactive hot melt urethane PSA art. For example, the hot melt urethane adhesive compositions disclosed in Markevka's U.S. Patent No. 4,820,368 (the "Markevka Patent"), which require the presence of a thermoplastic resin, have been found to possess good initial tack, but with time to have the tack significantly reduced or absent.

An objective of this invention is to provide a new class of PSAs that achieve the proper balance of desired properties, preferably promoting permanent tack and the ability to viscously flow upon application of even minor pressure. This long term visco elasticity is another important property for a commercially viable PSA. Another objective is to prepare a stable urethane prepolymer that will not prematurely gel so as to provide a longer useful work life.

### BRIEF SUMMARY OF THE INVENTION

Herein provided is a reactive, moisture curable hot melt applied urethane pressure sensitive adhesive composition (PSA)
comprising (a) a urethane prepolymer which comprises the reaction product of a hydroxy-terminated polyalkylene resin (preferably a hydroxy-terminated polybutadiene resin), a monoisocyanate, and a polyisocyanate (preferably a diisocyanate); (b) a tackifying resin (at least a portion of which is preferably blended with the prepolymer); and (c) a plasticizing oil; a method for bonding two or more substrates which comprises applying to the surface of at least one of the substrates a thin film of the PSA composition; laminates comprised of a release layer and a substrate having sandwiched therebetween a thin film of the PSA composition; a method for preparing the PSA composition which comprises (a) preparing a urethane prepolymer by contacting a hydroxy-terminated polyalkylene resin, a monoisocyanate, a polyisocyanate and, optionally, tackifying resin (preferably at least about 75 % of the desired tackifier amount), preferably in the presence of a catalyst; and (b) contacting the prepolymer from step (a) with a plasticizing oil and the remainder, if any, of the desired amount of tackifier; a stable urethane prepolymer comprising the reaction product of a hydroxy-terminated polyalkylene resin, a monoisocyanate, and a polyisocyanate; and a method for preparing stable urethane prepolymers which comprises contacting a hydroxy terminated polyalkylene resin, a monoisocyanate, a polyisocyanate and, optionally, a tackifying resin, the polyalkylene resin preferably being contacted with the monoisocyanate prior to contact with the polyisocyanate. The solvent-free PSA compositions of this invention are preferably solids or extremely viscous liquids prior to reaction with atmospheric moisture. Subsequent to application as a thin film, the compositions react with atmospheric moisture resulting in both chain extension and crosslinking.

### DETAILED DESCRIPTION

We have found that the foregoing PSA compositions possess the desired balance of properties required for commercial viability as a hot melt moisture cured adhesive, such as long-term visco elasticity. The technique for attaining visco elasticity involves internal or reactive plasticization at the urethane group by use of a monoisocyanate such as octadecylisocyanate (ODI). This inhibits hydrogen bonding due to the steric nature of the monoisocyanate; it also inhibits the formation of biurets and allophanates for the same reason and thus reduces hard segment formation, an undesirable feature for a tacky PSA, while markedly enhancing stability of the adhesive at elevated temperatures. Hard segments can also be controlled by maintaining at most a low stoichiometric excess of isocyanate in the formulation. Upon moisture curing, the excess isocyanate groups can form ureas, biurets and allophanates, introducing unwanted hard segments into the PSA. Having monoisocyanate present in the prepolymer has also been found to stabilize the prepolymer against premature gelling by reducing the average functionality of the polyalkylene resin, so that the prepolymer has a longer useful work life.

Addition of a plasticizing oil to the urethane prepolymer is also essential to serve as an external plasticizer and as an aid to permit incorporation of greater amounts of tackifier resin. A preferred plasticizer is Shellflex® 371, a naphthenic oil available commercially from Shell Chemical. When added during prepolymer formation, however, it does not serve the intended purpose, the formula becoming hard and brittle.

The PSAs can be applied to various substrates, including polypropylene and polyethylene, at temperatures as low as 225°F or lower. We have found that these adhesives, after permitting atmospheric moisture curing, exhibit shear adhesion failure temperatures (SAFT) per ASTM D4497-89 of over 190°F. The exact shear adhesion failure. temperature will depend upon the particular formulation selected. The chain extension and crosslinking resulting from reaction with atmospheric moisture also results in an adhesive formulation less sensitive to solvents and to heat.

Formulations based on this invention provide wide latitude in selection of the components of the adhesive, as well as their relative proportions, as may be dictated by the particular adhesive physical properties required for a specific application, although it is desirable to avoid components containing active hydrogens which may react with the polyurethane prepolymer and thus result in a reduction in ultimate cured molecular weight or cause gelation.

In order to provide a manageable viscosity the hydroxy-terminated polyalkylene resins generally have a low number average molecular weight (below about 20,000), preferably below about 6,000 and most preferably below about 3,000. These resins are preferably homopolymers or copolymers containing isoprene, butylene and/or butadiene units having 2 or more terminal hydroxyl groups. The hydroxy-terminated butadiene copolymers, preferably a butadiene diol, can contain as a comonomer a polymerizable monomer compatible with butadiene which can be used in adjusting the compatibility of the prepolymer composition with other components used in the adhesive. For example, the butadiene copolymer can contain styrene, ethylene, hydroxyethyl acrylate, acrylonitrile, or other ethylenically unsaturated vinyl monomer. The most preferred -OH terminated polymers are homopolymers of butylene and hydrogenated homo- or copolymers of isoprene and butadiene for reasons of enhanced thermal stability Examples of useful hydroxy-terminated polybutadiene resins are Poly bd® resins available commercially from Elf Atochem, such as Poly bd R45HT.

The monoisocyanate may be a monoarylisocyanate or, preferably, a monoalkylisocyanate. Examples include p-toluenesulfonyl isocyanate, phenyl isocyanate, isopropenyl cumyl isocyanate and, preferably, octadecyl isocyanate (available commercially from Bayer as Mondur® O).

The polyisocyanate can be an organic, aliphatic or aromatic isocyanate compound having 2 or more isocyanate (-NCO) functionalities. The isocyanate compound can have from one to about ten aliphatic or aromatic groups substituted by the isocyanate group. The isocyanates can also contain other substituents which do not substantially adversely affect the viscosity of the isocyanate-terminated prepolymers, the adhesive properties of the bond line or the reactivity of the -NCO groups during the formation of the prepolymer. The isocyanate can also comprise mixtures of both aromatic and aliphatic isocyanates and isocyanates having both aliphatic and aromatic character. Typical aromatic isocyanates include diphenylmethane diisocyanate compounds (MDI) including its isomers, carbodiimide modified MDI, diphenylmethane-4,4'-diisocyanate, diphenylmethane-2,2'-diisocyanate, diphenylmethane-2,4'-diisocyanate, and other oligomeric methylene isocyanates; toluene diisocyanates (TDI) including isomers thereof, tetramethylxylene diisocyanate (TMXDI), isomers of naphthylene diisocyanate, isomers of triphenylmethane triisocyanate, and mixtures thereof. Aliphatic di, tri, and polyisocyanates are also useful including for example isophorone diisocyanate, hydrogenated aromatic diisocyanates, aliphatic polyisocyanates, cycloaliphatic polyisocyanates and others. A diisocyanate is preferably used, such as MDI, available commercially from Dow Chemical as Isonate® 2125 MDI.

Between about 75% and 100% of the desired amount of tackifying resin is typically added during preparation of the prepolymer. If a thermoplastic resin is to be added to the prepolymer in step (b), then about 25% of the tackifier is typically reserved for preblending with the thermoplastic resin and the plasticizing oil prior to their addition to the prepolymer. Useful tackifying resins comprise aliphatic, aromatic or aliphatic aromatic tackifying resins including both natural and synthetic terpene resins. Aliphatic tackifiers can be formed from unsaturated petroleum feedstocks which contain ethylenically unsaturated monomers having 4 or more carbon atoms. Typical monomers making up such resins include 1,3-butadiene, cis-1,3-pentadiene, trans-1,3-pentadiene, 2-methyl-1,3-butadiene, 2-methyl-2-butene, cyclopentadiene, dicyclopentadiene, and others. Aromatic resins can be prepared from any monomer containing an aromatic moiety and a polymerizable ethylenically unsaturated group. Examples include styrenic monomers such as styrene, alphamethyl styrene, vinyl toluene, methoxystyrene, tertiary butyl stryrene, chlorostyrene, indene monomers and others. Aliphatic/aromatic tackifiers can be made by polymerizing feed streams containing a mixture of one or more aliphatic monomers in combination with one or more aromatic monomers. Examples of such tackifiers available commercially are Exxon Chemical's Escorez® 2101 and Escorez 2520. Tackifying resins containing esters or acids are preferably avoided, however.

The use of a catalyst for formation of the urethane is preferred. Typical catalysts include dimethylethylamime and dibutyltindilaurate.

Other conventional non-active hydrogen-bearing additives can also be added as desired, including other compatible polymers, fillers, pigments, dyes, inhibitors, antioxidants, UV absorbers and the like. Examples are dry fillers such as calcium carbonate, antioxidants such as Ethyl Corporation's Ethyl® 330 and Cytex Industries' Cyanox® 2246, vinyl plasticizers, thermoplastic resins such as Shell Chemical's Kraton® SIS (styrene-isoprene-styrene) or SBS (styrene-butadienestyrene) block copolymers, Dexco Polymer's Vector® 4113 SIS, Goodyear's Natsyn® 2200 IR (isoprene rubber) and other conventionally used thermoplastic polymers such as those listed at columns 5-6 of the Markevka Patent.

Typical compositions of this invention are shown in the following table:

| Component | Parts by weight. typical and (preferred) | |
|---|---|---|
| Poly bd R45HT (or corresponding stoichiometric amount of the hydroxy terminated polybutadiene resin) | 100 | (100) |
| ODI (or corresponding stoichiometric amount of the monoisocyanate) | 1-20 | (4-10) |
| Tackifier | 1-200 | (50-195) |
| Plasticizer oil | 1-60 | (5-40) |
| Isonate 2125 MDI (or corresponding stoichiometric amount of the polyisocyanate) | 13-50 | (16-30) |
| NCO/OH ratio of prepolymer components | 1.7-5.0 | (2.0-3.0) |

Two typical methods for preparation of the stable prepolymer are set forth below, the exact conditions depending on the components.

One alternative comprises:
1. Blend Poly bd R45HT resin, tackifier (75-100% of the total to be used) and any antioxidant at elevated temperature until the tackifier melts and is well-blended. Although the tackifier can be added after formation of the prepolymer, addition as part of the prepolymer helps prevent premature gelling.
2. Apply a vacuum to remove any water.
3. Add monoisocyanate and any catalyst and allow to react until urethane formation is complete.
4. Add the urethane from step 3 to polyisocyanate and allow to react.

A second alternative for prepolymer preparation involves:
1. Heat Poly bd R45HT resin andapplya vacuum to remove any water.
2. Add monoisocyanate and any catalyst and allow to react until urethane formation is complete.
3. In a separate vessel, heat 75-100% of the tackifier resin and any antioxidant until the tackifier melts; then add the tackifier to the material from the second step.
4. Add the urethane from step 3 to polyisocyanate and allow to react.

Once the prepolymer is prepared, the plasticizing oil and any thermoplastic resin and remaining tackifier can be added. (If used, the thermoplastic resin should preferably be preblended with the oil and the remaining 25 % of the tackifier. Alternatively, the thermoplastic resin can be dissolved in dry toluene, added to the prepolymer and the toluene stripped off by vacuum.)

The reactive PSA composition may be hot melt applied to a substrate web which could be paper, plastic film, metal foil, release paper and so forth, by any conventional casting means that is capable of metering and applying the desired thickness uniformly across the web by conventional means such as a rod, a slot die, a knife coater, a reverse roll coater and so forth. The coated web is preferable wound-up on a storage roll where the moisture curing occurs within a few hours at elevated storage temperature or within one to seven days at ambient temperature. When the pressure sensitive adhesive is first applied to a release layer (such as paper) rather than directly to the end-product substrate web, such as a plastic film or metal foil, then the adhesivecoated release layer and the end-product substrate may be laminated together to form a sandwich having the adhesive centrally located prior to being wound up. Normally, highest adhesion between the end-product substrate and adhesive is obtained when they are laminated together prior to completion of the moisture cure of the pressure sensitive adhesive layer deposited. Therefore, it is sometimes desirable to apply the hot melt urethane composition prior to moisture curing, directly onto the end-product substrate and then apply the second substrate to sandwich or laminate two similar or dissimilar substrates together with applied pressure. With time, the adhesive layer will moisture cure.

The substrates to be bonded can be polar or non-polar. Substrates include metals (steel, aluminum, copper, etc), plastics (polypropylene, polyethylene, PVC, etc.), wood, glass, fabric, rubber, and the like.

### EXAMPLES

Some representative examples follow:
Example 1: An example of the performance of the PSA composition is set forth below in comparison to the same material containing some hard segments (as a result of addition in the preparation of the prepolymer of a short chain diol, phenyl diisopropanolamine, available commercially as Voranol® 220-530 from Dow Chemical). The formulations (in parts by weight) are as follows, the example using less MDI since elimination of the diol (Voranol) reduces the number of hydroxy groups and using less plasticizing oil since elimination of the Voranol reduces the amount of hard segments to be plasticized:

| Component | Comparative Example With Voranol | Example #1 Without Voranol |
|---|---|---|
| Polybd R45HT | 100 | 100 |
| Mondur O | 5 | 5 |
| Voranol 220-530 | 4 | 0 |
| Escorez 2101 | 100 | 100 |
| Escorez 2520 | 20 | 20 |
| Ethyl 330 | 2 | 2 |
| Isonate 2125 MDI | 32 | 21 |
| Shellflex 371 oil | 28 | 22 |

One day after casting, the following properties were noted:

| Property | Comparative Example With Voranol | Inventive Example #1 Without Voranol |
|---|---|---|
| Peel, pli | 0.01C¹ | 2.8C |
| Tack, g | 304 | 794 |
| Shear, hours | <0.1 | 406+ |
| Peel after 4 days | 2.6C | 5.5C |
| Tack, after 4 days | 673 | 1110 |
| Tack, after 6 days | 564 | 1047 |
| Tack, after 8 days | 279 | 852 |

| | | |
|---|---|---|
| 1 - "C" represents cohesive failure, where the adhesive splits and is on both the tape and the substrate when peeled apart. | | |

The procedures used in the examples to determine these properties are as follows:
(A) The Shear test used the Pressure Sensitive Tape Council test method PSTC-7, as follows:
   Equipment:
   1. Shear box with rack to hold panels 2° from vertical so that the back of the panel forms an angle of 178 ° with the extended specimen having constant +90°F.
   2. Roller, 4.5 Ibs
   3. Test panels
   4. 1000 Gram weights
   Sample Preparation:
   1. Samples will be one inch wide and approximately six inches long.
   2. Three tests will determine the average.
   Procedure:
   1. Clean each panel by dispensing MEK onto the surface and scrubbing with an absorbent tissue. Rinse with fresh solvent and wipe to dryness.
   2. Place specimen one inch from edge of panel so that a one inch by one inch portion is in contact with the surface.
   3. Pass the roller over the applied sample once in each direction. Fold the extended end of the sample and staple.
   4. Allow to dwell in shear box at 90°F for 24 hours.
   5. Record initial time and hang weight.
   6. When weight falls, record final time. The difference between final and initial is the creep time.
   7. If specimen is over 100 hours, remove from box.
(B) The Peel Adhesion test used Pressure Sensitive Tape Council test method PSTC-1, ASTM D90349, where all substrates were stainless steel panels (unless otherwise noted), as follows:
   Equipment:
   1. Instron tensile tester
   2. PSTC Roller, 4.5 Ibs
   3. Stainless steel panels, 2 x 5 x 1/16 inch, 2.0 microinch finish.
   Sample Preparation:
   1. Each test specimen will be one inch wide and approximately 10 inches long.
   2. Each determination will be done in triplicate.
   Procedure:
   1. Clean each panel by dispersing MEK onto the surface and scrubbing with an absorbent tissue. Rinse with fresh solvent and wipe to dryness.
   2. Apply sample, adhesive side down, to center of panel.
   3. Pass the roller over applied sample by starting in the center, rolling lengthwise in each direction, and stopping in the center.
   4. Prepare each sample separately and allow to dwell 30 minutes at 72°F/50% relative humidity.
   5. Place panel in test jig and clamp sample end into jaw of Instron. Operate lower jaw at 12 inches per minute.
   6. Report each value in pound per linear inch and average three determinations. Record type of failure.
(C) The Tack test used American Standards Test Method ASTM D-2979, as follows:
   Equipment:
   1. Polyken Tack Tester
   2. Polyken weights
   3. Q-tips
   4. Reagent grade MEK
   Sample Preparation:
   1. Samples will be approximately one square inch in size.
   2. Seven trials will determine the average.
   Procedure:
   1. Clean probe of tack tester and weights with MEK. Allow to air dry.
   2. Place sample, adhesive side down, on weight so that probe opening is covered.
   3. Place weight in tack tester, zero the scale, and press the test button.
   4. Read and record value on dial.
   5. Clean probe between each trial. Allow one minute for solvent to dry.

Examples 2 to 4; These examples illustrate that the PSA compositions may optionally contain thermoplastic resins. The formulations are as follows:

| Component | Ex. 2 | Ex. 3 | Ex. 4 |
|---|---|---|---|
| Polybd R45HT | 100 | 100 | 100 |
| Mondur O | 5 | 5 | 5 |
| Escorez 2101 | 158 | 158 | 158 |
| Cyanox 2246 | 2 | 2 | 2 |
| Dimethylethylamime | 0.25 | 0.25 | 0.25 |
| Isonate 2125 MDI | 21 | 22 | 21 |
| Shellflex 371 oil | 22 | 22 | 23 |
| Vector 4113 | 13 | - | - |
| Kraton 1107 | - | 13 | - |
| Natsyn 2200 | - | - | 13 |

The following properties were found, with a 3 day cure @ 72°F/50% relative humidity:

| Property | Ex. 2 | Ex. 3 | Ex. 4 |
|---|---|---|---|
| peel, pli | 7.0C | 6.2A² | 7.0T³ |
| tack, g | | | |
| initial | 925 | 938 | 1309 |
| after 7 days | 878 | 867 | 1320 |
| after 13 days | 831 | 817 | 1102 |
| after 29 days | 914 | 753 | 584 |
| shear, hours | 170C | 141C | 30.5C |
| after 1 week heat aging @ 158°F: | | | |
| peel, pli | 4.2G⁴ | 4.4G | 5.7G |
| tack, g | 911 | 686 | 823 |

| | | | |
|---|---|---|---|
| 2 - "A" represents adhesive failure, where the adhesive totally stays with the tape when peeled from the substrate. | | | |
| 3 - "T" represents transfer failure, where the adhesive totally stays on the substrate when tape is peeled from the substrate. | | | |
| 4 - "G" represents ghosting, where an adhesive haze remains on the surface when peeled. | | | |

Examples 5 & 6: These examples illustrate excellent adhesion to non-polar substrates, with and without a catalyst. The formulations are as follows:

| Component | Ex. 5 | Ex. 6 |
|---|---|---|
| Polybd R45HT | 100 | 100 |
| Mondur O | 7 | 5 |
| Escorez 2101 | 158 | 158 |
| Cyanox 2246 | 2.1 | 2.1 |
| Dimethylethylamime | - | 0.25 |
| Isonate 2125 MDI | 22 | 22 |
| Shellflex 371 oil | 22 | 22 |
| Kraton 1107 | 13 | 13 |

The following properties were found:

| Property | Ex. 5 | Ex. 6 |
|---|---|---|
| SAFT,°F (ASTM D4497-89) | 194 | 221 |
| Peel, pli from: | | |
| polypropylene | 7.0C | 5.3C |
| polyethylene | 7.1C | 5.5C |

## Claims

1. A moisture curable hot melt applied urethane pressure sensitive adhesive composition comprising
(a) a urethane prepolymer which comprises the reaction product of a hydroxy-terminated polyalkylene resin, a monoisocyanate and a polyisocyanate;
(b) a tackifying resin; and (c) a plasticizing oil.

2. A composition as in Claim 1 wherein at least a predominant portion of the tackifying resin is blended with the prepolymer.

3. A composition as in Claim 1 or Claim 2 wherein the polyalkylene resin is a hydroxy-terminated polybutadiene resin.

4. A composition as in any of the preceding Claims wherein the monoisocyanate is octadecylisocyanate.

5. A composition as in any one of the preceding Claims wherein the polyisocyanate is a diisocyanate.

6. A composition as in any one of the preceding Claims wherein the polyisocyanate is diphenylmethane diisocyanate.

7. A composition as in any of the preceding Claims wherein the ratio of isocyanate groups to hydroxy groups in the prepolymer components is from about 1.7 to about 5.0.

8. A composition as in any one of the preceding Claims which further

9. A method of preparing a moisture curable hot melt applied urethane pressure sensitive adhesive composition according to any preceding claim which method comprises (a) preparing a urethane prepolymer by contacting a hydroxy terminated polyalkylene resin, a monoisocyanate, a polyisocyanate and, optionally, tackifying resin; and (b) contacting the prepolymer from step (a) with a plasticizing oil and any remaining tackifing resin.

10. A method as in Claim 9 wherein 75-100% of the tackifying resin is added in step (a).

11. A method of bonding two or more substrates which comprises applying to the surface of at least one of the substrates a thin film of the composition any one of claims 1 to 8.

12. A method as in Claim 11 where one or more of the substrates is selected from the group consisting of polypropylene and polyethylene.

13. A laminate comprising a release layer and a substrate having sandwiched therebetween a thin film of the composition of any one of claims 1 to 8.

14. A stable urethane prepolymer which comprises the reaction product of a hydroxy-terminated polyalkylene resin, a monoisocyanate and a polyisocyanate.

15. A prepolymer as in Claim 14 wherein the polyalkylene resin is reacted with the monoisocyanate prior to reaction with the polyisocyanate.

16. A prepolymer as in Claim 14 or Claim 15 containing tackifying resin blended therewith.

17. A prepolymer as in any one of Claims 14 to 16 wherein the polyalkylene resin is a hydroxy-terminated polybutadiene resin.

18. A prepolymer as in any one of Claims 14 to 17 wherein the monoisocyanate is octadecylisocyanate.

19. A prepolymer as in any one of Claims 14 to 18 wherein the polyisocyanate is a diisocyanate.

20. A prepolymer as in Claim 19 wherein the polyisocyanate is diphenylmethane diisocyanate.

21. A prepolymer as in any one of Claims 14 to 20 wherein the ratio of isocyanate groups to hydroxy groups in the prepolymer components is from about 1.7 to about 5.0.

22. A method of preparing a stable urethane prepolymer which comprises contacting a hydroxy terminated polyalkylene resin, a monoisocyanate, a polyisocyanate and, optionally, tackifying resin.

23. A method as in Claim 22 wherein the polyalkylene resin is contacted with the monoisocyanate prior to contact with the polyisocyanate.

24. A stable urethane prepolymer comprising a hydroxy-terminated polyalkylene resin having reduced functionality.

25. A moisture curable hot melt applied pressure sensitive adhesive composition containing the stable prepolymer of Claim 24.

26. Use of the stable prepolymer of Claim 24 in the preparation of curable hot melt applied pressure sensitive adhesive compositions.

27. A moisture curable hot melt applied urethane pressure sensitive adhesive composition comprising (a) the stable urethane prepolymer of claim 24, (b) a tackifying resin; and (c) a plasticizing oil.
